# EUROPEAN PATENT APPLICATION

(11) **EP 2 571 278 A1**
(43) Date of publication of application: **20.03.2013**
(21) Application number: 11306153.5
(22) Date of filing: 15.09.2011
(51) Int. Cl.: H04N 21/2343, H04N 21/234

(54) **Video processing device and method for processing a video stream**

(71) Applicant: Thomson Licensing, 92130 Issy-les-Moulineaux (FR)
(72) Inventor: Orhand, Anita, 35220 Rennes (FR); Bordes, Philippe, 35890 LAILLE (FR); Thoreau, Dominique, 35510 CESSON SEVIGNE (FR)
(74) Representative: Hartnack, Wolfgang

(57) **Abstract**

Many video processing applications require the insertion of new pictures into a video stream. If an instantaneous decoding reset (IDR) information is contained in that video stream, it is impossible to insert new slice data that reference pictures preceding the IDR information in the video stream. The objective of the present invention is to reduce the computational complexity for manipulating a video stream in such a way that the video stream may be decoded by a compliant receiver. According to the inventive method, pictures contained in an input video stream are received with a processing unit. Further, an output video stream (18) is generated from at least a part of the received pictures. Upon receiving an IDR-picture, the IDR-picture is transformed into a non-IDR-picture (14') by removing the reset information (IDR). From the transformed picture (14') at least a part is then transferred to an output video stream (18).

## Description

The invention relates to a video processing device and a method for processing a video bitstream. In particular, the invention relates to processing a video bitstream according to the H.264 standard, which is equivalent to the standard MPEG-4/AVC (Advanced Video Coding).

### Background

The H.264 standard ("ISO/IEC 14496-10 Advanced Video Coding", 4th Edition, ITU-T Recommendation H.264, March 2005) has been developed in response to the growing need for a higher compression of moving pictures in various applications, like, for example, video conferencing, digital storage media, television broadcasting, Internet streaming, and communications applications. It is also designed to enable the use of the coded video representation in a flexible manner for a wide variety of network environments.

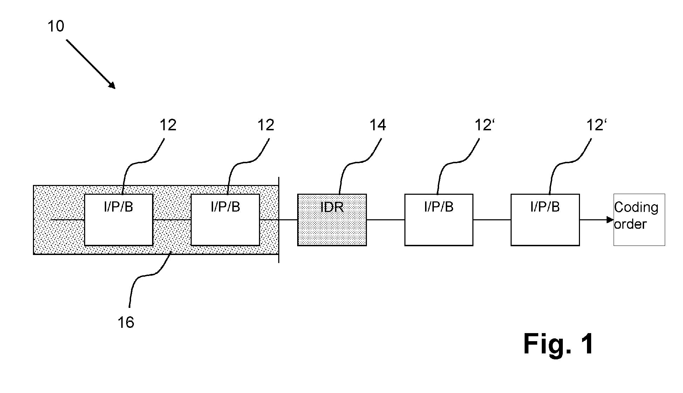

In that context, coded video is represented as a sequence of various NAL units (NAL - network abstraction layer) which form the video stream. Within the video stream, sequence parameter set NAL units (SPS NAL units) group together information common to a sequence of pictures. Picture parameter set NAL units (PPS NAL units) group together information common to one picture. These general data are provided in the bitstream and give an encoding/decoding context. Additional NAL units are used to encode slices in the video. The term slice refers to a spatially distinct region of a picture frame. Depending on the type of video stream, a slice may also comprise a complete picture. A slice may or may not be linked with other slices in the video stream. Depending on the degree of interlinkage on can distinguish intracoded slices (I-slices), predicted coded slices (P-slices), and bi-directionally predicted coded slices (B-slices). Further, in order to be able to grab hold of the bitstream, e.g. in a broadcast application, a video stream like, for example, a H.264 video stream may also include a random access point (RAP) mechanism. In the following, the RAP mechanism is explained in more detail on the basis of Fig. 1. Fig. 1 shows a video bitstream or video stream 10 consisting of a sequence of pictures 12, 12'. Each picture 12, 12' may consist of one or several slices, wherein each slice may be of the type I-slice, P-slice or B-slice. The video stream 10 is processed by a decoder in the order from left to right in Fig. 1. The order of processing is indicated in Fig. 1 as coding order. A RAP may be provided in the form of an instantaneous decoding refresh picture 14 (IDR-picture) in the video stream. An IDR-picture contains only I-slices. Additionally, the NAL units that contain the IDR-picture data are marked as IDR NAL units. Starting the decoding process at any IDR NAL unit in the video stream 10 is possible, independently of what was transmitted in the pictures 12 contained in the video section 16 preceding the IDR-picture. In other words, the pictures 12' following the IDR-picture 14 are encoded in such a way that they do not contain any reference to the pictures 12 preceding the IDR-picture 14.

Many video processing applications require the insertion of new pictures into a video stream. For example, when splicing video streams, obtaining a smooth transition between two or more video streams may require a visual transition from one picture in the first stream towards another picture in a second stream. Similarly, when processing a single video stream, the insertion of special effects like a chequerboard transition between two scenes or a similar transition effect may also require the insertion of additional pictures.

As a consequence of the RAP mechanism, a video processing device for splicing or for generating special effects in the video stream 10 may not be able to provide a transition effect. After receiving the IDR-picture 14 it is impossible to insert new slice data NAL units with reference to the decoded pictures 12 (NAL units) that precede the IDR-picture 14 in the video stream 10. In fact, any compliant decoder receiving the processed video stream resets its context upon the reception of the IDR-picture 14. The context also includes the reference pictures list. Such a decoder can thus not manage additionally inserted slice data NAL units that refer to the pictures 12 preceding the IDR-picture 14 in the video stream 10. This problem may occur, for instance, when cross-fading between a picture 12 immediately preceding the IDR-picture 14 and the IDR-picture 14 itself. Another example is the generation of a synthetic curtain.

### Invention

As a result, the decoder might ignore the special effects and keep a rough transition in the stream. However, this solution may introduce a time discontinuity at the transition point. The reason for this is an incorrect handling of presentation timestamps.

A solution to this problem is to fully decode and re-encode the bitstream in the video processing device that wants to insert new NAL units. This allows integrating information from the preceding pictures 12 into the re-encoded IDR-picture 14. However, this results in a comparably large calculation amount and thus requires the according calculation resources.

A problem to be solved by the invention is to provide a manipulated video stream in such a way that the video stream can still be reliably decoded by a compliant receiver. The manipulation must be computationally simple. This problem is solved by the method disclosed in claim 1. An apparatus that utilises this method is disclosed in claim 11. Additional advantageous embodiments of the invention are given by the dependent claims.

The inventive method allows to process an input video stream that comprises at least one encoded IDR-picture and several encoded non-IDR-pictures, wherein the IDR-picture comprises a reset information item for signalling an instantaneous decoding reset. A non-IDR-picture may be a picture containing I-slices, P-slices or B-slices without the reset information. According to the method, pictures contained in the input video stream are received with a processing unit. Further, from at least a part of the received pictures an output video stream is generated with the processing unit. Upon receiving an IDR-picture, the IDR-picture is transformed into a non-IDR-picture by removing the reset information. From the transformed picture at least a part is then transferred to the output video stream.

The inventive method provides the advantage that a receiver receiving the output video stream from the processing unit will not reset its context upon the reception of the transformed picture, as the reset information is removed. It is thus possible to insert slice data NAL units that may also refer to picture data of pictures that preceded the IDR-picture in the input video stream.

As already explained above, the slice may also represent a sub-picture. One embodiment of the inventive method deals with processing a video stream containing such pictures that are sub-divided into slices. For encoding each picture these slices may be encoded separately, that is independently from each other. In that case, for generating the output video stream according to this embodiment of the inventive method at least one received encoded slice is transferred to the output stream. In other words, the slide is neither decoded nor re-encoded. This reduces the calculation amount significantly. On the basis of this embodiment it is for example possible to insert a chequerboard transition with each field of the checkerboard consisting of one of the slices.

According to another embodiment of the inventive method, the received non-IDR-pictures that follow the IDR-picture in the input video stream are adapted by the processing unit for transmission in the output video stream by removing such reference information in the received non-IDR-pictures that describes the structure of the input video stream with reference to the IDR-picture. Such reference information may especially comprise a frame number or a picture of a counter describing the position of the non-IDR-picture in the input video stream with regard to the IDR-picture.

According to another embodiment of the inventive method, at least one new picture is generated with the processing unit, wherein the new picture is encoded in dependence on at least one non-IDR-picture that preceded the IDR-picture in the input video stream. The new picture is inserted into the output video stream after inserting at least a part of the transformed IDR-picture. The new pictures may also comprise a reference to pictures that preceded the IDR-picture in the input video stream. Nevertheless, the can be reliably decoded by any receiver compliant to the standard.

In other embodiments of the inventive method, a special effect is inserted in the output video stream by the processing unit. Preferred embodiments of this type insert a cross-fading or a synthetic curtain between a non-IDR-picture that preceded the IDR-picture in the input stream and the IDR-picture itself. These special effects can be reliably decoded by receiver as no reset information will interrupt the decoding of a sequence of pictures representing the special effects.

The inventive method is also suitable for splicing two or more video streams. One embodiment of the inventive method comprises the steps of receiving pictures contained in a first input video stream with the processing unit and receiving pictures contained in a second input video stream with the processing unit. The received pictures of the two input video streams are spliced to give the output video stream. In the output video stream, a visual transition is generated from pictures of one video input stream to pictures of the other video input stream. As no reset information will be contained in the output video stream within the splicing sequence a compliant decoder will display a smooth transition from one video stream to the other.

The method described so far may be applied to video streams of any standard that provides the possibility of including IDR-pictures in a video stream. In the following, embodiments of the inventive method are described, that deal with the special conditions given in a H.264 video stream.

According to one of these embodiments, the NAL unit type of NAL units of the IDR-picture is changed. This is a very fast method to transform an IDR-picture into a non-IDR-picture. Preferably, the NAL unit type is set to nal_unit_type = 1.

However, apart from this basic method for transforming the IDR-picture, several further measures can be taken in order to make the decoding of the output video stream by a H.264 compliant receiver even more reliable and robust.

According to one embodiment, the idr_pic_id syntax element is removed from slice headers of slices of the IDR-picture.

According to another embodiment, in at least one dec_ref_pic_marking syntax a no_output_of_prior_pics_flag syntax element and/or a long_term_reference_flag syntax element are removed before transferring the dec_ref_pic_marking syntax into the output video stream.

Another embodiment comprises the steps of inserting in at least one dec_ref_pic_marking syntax an adaptive_ref_pic_ marking_mode_flag syntax element before transferring the dec_ref_pic_marking syntax into the output video stream.

According to another embodiment, in at least one slice header syntax the frame_num syntax element of the transformed picture and/or of the received non-IDR-pictures following the transformed picture in the output video stream and/or of newly inserted pictures is set to a value that is dependent on a value of a frame_num syntax element of a non-IDR-picture that was received by the processing unit before the IDR-picture.

Finally, according to another embodiment, syntax elements that are dedicated to a picture order count and that are contained in the transformed picture and the non-IDR-pictures that are received after the IDR-picture are changed before transferring them to the output video stream.

Another aspect of the invention relates to a video processing device. The inventive device comprises a video stream input unit for receiving at least one input video stream, a video stream output unit for transmitting a video output stream to an external receiver, and a processing unit that is adapted to perform an embodiment of the inventive method.

The invention also comprises enhancements of the inventive device that comprise features corresponding to features of the described embodiments of the inventive method. These corresponding embodiments of the inventive device are thus not described here in more detail.

### Drawings

Exemplary embodiments of the invention are described with reference to the accompanying drawings, which show in:
- Fig. 1: a schematic illustration of a structure of an input video bitstream;
- Fig. 2: a schematic illustration of a structure of an output video bitstream that has been generated from the input video bitstream of Fig. 1 by a video processing device according to an embodiment of the inventive video processing device;
- Fig. 3: four pictures that are my be contained in the output video stream of Fig. 2 illustrating different transition effects generated by the inventive video processing device.

### Exemplary embodiments

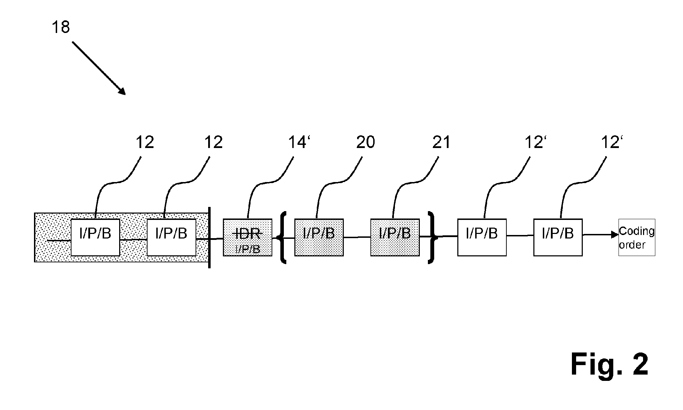

Fig. 2 shows a output video stream 18 that has been generated by a video processing device. The video processing device has received the input stream 10 and uses the input data contained in the input stream 10 to compose the output stream 18. The output stream 18 is transmitted to a receiver that decodes the output stream 18 and displays the pictures contained in the output stream 18 on a video screen. The receiver is connected to the video processing device via a video cable network or a wireless connection, e.g. over satellite. Both the input stream 10 and the output stream 18 are encoded according to the H.264 standard.

The output stream 18 contains the pictures 12, 12' from the input stream 10. The IDR-picture 14 of the input stream 10 has been transformed or mutated into a non-IDR-picture or transformed picture 14' by the video processing device before transferring it into the output stream 18. For example, the transformed picture 14' can be composed of I-slides. After the transformed picture 14', the video processing device has inserted new non-IDR-pictures 20, 21 into the output stream 18.

The main difference between the IDR NAL units of the IDR-picture 14 and the non-IDR NAL units of the transformed picture 14' is the nal_unit_type syntax element. It specifies the type of RBSP data structure (RBSP - raw byte sequence payload) contained in the NAL unit (see section 7.3.1 "NAL unit syntax" in the above-referenced standard). The syntax element is changed from nal_unit_type = 5 to nal_unit_type = 1.

This first modification performed by the processing device was followed by other changes of syntax elements (value or presence) along the bitstream. The following changes were also applied by the processing device:
The idr_pic_id syntax element that identified the IDR-picture, was removed from the slice_header() syntax (see section 7.3.3 "Slice header syntax" in the above-referenced standard).

Those no_output_of_prior_pics_flag and long_term_reference_ flag syntax elements only dedicated to IDR NAL units were removed from the dec_ref_pic marking () syntax (see section 7.3.3.3 Decoded reference picture marking syntax in the standard).

An adaptive_ref_pic_marking_mode_flag syntax element dedicated to non-IDR NAL Units is inserted with the value 0, to indicate the marking mode providing a first-in first-out mechanism for short-term reference pictures. This is sufficient, if the additional NAL Units of the inserted pictures 20, 21 can not be referenced. Otherwise, an adaptive_ref_pic _marking_mode_flag syntax element is set to 1, and memory_ management_control_operation syntax elements are also managed.

Other decoding mechanisms are also controlled by the processing device by providing the according data in the output bitstream 18:
The frame_num syntax elements in the slice headers that necessarily equalled zero in the initial IDR NAL unit of the IDR-picture 14 in the input stream 10, now respect the normative rules (see section 7.4.3 "Slice header semantics" in the above-referenced standard). Not only in the mutated NAL units of the transformed pictures 14', but in all following NAL Units as well, up to the next IDR-picture in the output video stream 18. For instance, in a typical gaps_in_frame_ num_value_allowed_flag = 0 context, the frame_num is a counter in the range of [0 . . 2^{log2_max_frame_num_minus4 + 4} [ that is only incremented in slices that can be referenced.

The picture order count dedicated syntax elements that were resetting the counter in the initial IDR NAL unit, now respect the normative rules in the output video stream 18 (see section 8.2.1 "Decoding process for picture order count" in the standard). The mutated NAL units and all following NAL units are changed in the output video stream 18 up to the next IDR-picture. For instance, in a typical pic_order_cnt_ type = 0 context, the pic_order_cnt_lsb and delta_pic_order_ cnt_bottom syntax elements values may have been shifted by the processing device to take into account the presence of the synthetic pictures 20 and 21 in display order.

For generating the output video stream 18, it is not necessary for the processing unit to completely decode and re-encode the pictures 12, 12' and 14 of the input video stream 10. Moreover, in the splicing context, another advantage of the inventive video processing device is that newly inserted NAL units of the pictures 20, 21 dedicated to a special effect keep a very cheap coding cost, in comparison to a full decoding and re-encoding pass. Consequently, no buffer overflow may occur. A buffer under-flow can be easily avoided by inserting stuffing NAL units.

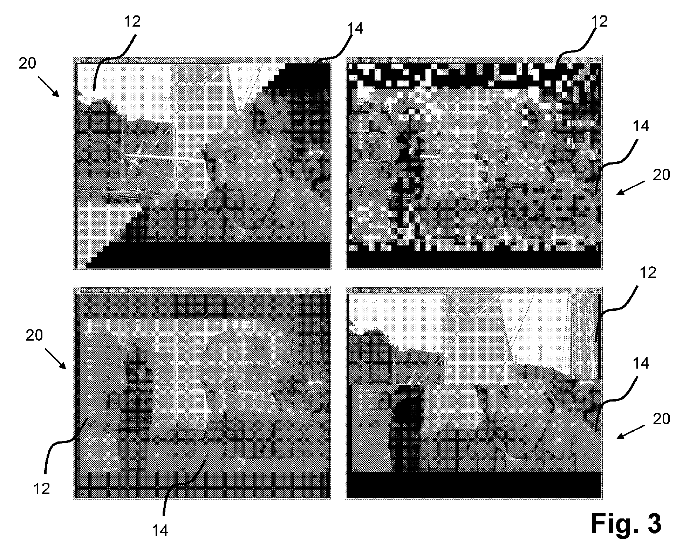

In Fig. 3 four different examples are shown of what the inserted non-IDR-picture 20 may look like. The non-IDR-picture 20 is created partly from slices originating from a non-IDR-picture 12 that preceded the IDR-picture 14 in the input stream 10. Another part of the non-IDR-picture 20 consists of slices that originate from the IDR-picture 14 itself. The image data of the slices of the pictures 12 and 14 were not decoded for creating the picture 20.

The inventive methods have also been tested in the context of a splicer application. Additionally inserted NAL Units resulted in smoother visual effects (cross-fading, curtain, checkerboard) than a rough transition between two video sequences AV1 and AV2, when the first NAL Units in the second H.264 stream AV2 is an IDR picture.

The examples illustrate how an instantaneous decoding reset (IDR) information may be discarded in a video bitstream in order to solve a splicing issue when a visual transition is needed from one picture in a first stream AV1 towards an IDR-picture in a second stream AV2. In fact, broadcast applications use to refresh a GOP (group of pictures) periodically to be able to grab hold of such bit streams. If an IDR-picture has been replaced with, for example, an I-picture at the splicing point, a receiver decoding the spliced video stream will display a smooth transition from the first to the second video stream as no reset will occur.

## Claims

1. Method for processing a first input video stream (10), wherein the input video stream (10) comprises at least one encoded IDR-picture (14) and several encoded non-IDR-pictures (12, 12') and wherein the IDR-picture (14) comprises a reset information for signalling an instantaneous decoding reset, **characterised by** the steps:
- receiving the pictures (12, 12', 14) contained in the first input video stream (10) with a processing unit;
- generating an output video stream (18) with the processing unit from at least a part of the received pictures (12, 12', 14);
- upon reception of the IDR-picture (14), transforming the IDR-picture (14) into a non-IDR-picture (14') by removing the reset information before transferring at least a part of the transformed picture (14') to output video stream (18).

2. Method according to claim 1, wherein the pictures (12, 12', 14) are sub-divided into slices and wherein for encoding each picture (12, 12', 14) its slices are encoded separately, and wherein for generating the output video stream (18) at least one received encoded slice is transferred to the output video stream (18).

3. Method according to claim 1 or 2, wherein the received non-IDR-pictures (12') that follow the IDR-picture (14) in the first input video stream (10) are adapted by the processing unit for transmission in the output video stream (18) by removing reference information in the received non-IDR-pictures (12') wherein the reference information describes the structure of the first input video stream (10) with reference to the IDR-picture (14), the reference information especially comprising a frame number or a picture order counter.

4. Method according to any of the preceding claims, comprising:
- generating at least one new picture (20, 21) with the processing unit, wherein the new picture (20, 21) is encoded in dependence on at least one non-IDR-picture (12) that preceded the IDR-picture (14) in the first input video stream (10);
- inserting the new picture (20, 21) into the output video stream (18) after inserting at least a part of the transformed picture (14') into the output video stream (18).

5. Method according to any of the preceding claims, wherein a special effect is inserted in the output video stream (18) by the processing unit, especially a cross-fading or a synthetic curtain between a non-IDR-picture (12) preceding the IDR-picture (14) in the first input video stream (10) and the IDR-picture (14) itself.

6. Method according to any of the preceding claims, comprising:
- receiving pictures contained in a second input video stream with the processing unit;
- splicing the received pictures of the two input video stream in the output video stream by generating a visual transition from one video input stream to the other video input stream, preferably from the second to the first video stream.

7. Method according to any of the preceding claims, wherein at least the first input video stream( 10) is a H.264 video stream and wherein for transforming the IDR-picture (14) the NAL unit type of NAL units of the IDR-picture (14) is changed, preferably to nal_unit_type = 1.

8. Method according to any of the preceding claims, wherein at least the first input video stream (10) is a H.264 video stream and wherein for transforming the IDR-picture (14) the idr_pic_id syntax element is removed from slice headers of slices of the IDR-picture (14).

9. Method according to any of the preceding claims, wherein at least the first input video stream (10) is a H.264 video stream and wherein in at least one dec_ref_pic_ marking syntax a no_output_of_prior_pics_flag syntax element and/or a long_term_reference_flag syntax element is removed before transferring the dec_ref_pic_marking syntax into the output video stream (18).

10. Method according to any of the preceding claims, wherein at least the first input video stream (10) is a H.264 video stream and wherein in at least one dec_ref_pic_ marking syntax an adaptive_ref_pic_marking_mode_flag syntax element is inserted before transferring the dec_ref_pic_marking syntax into the output video stream (18) .

11. Method according to any of the preceding claims, wherein at least the first input video stream (10) is a H.264 video stream and wherein in at least one slice header syntax the frame_num syntax element of the transformed picture (14') and/or the received non-IDR pictures (12') following the transformed picture (14') in the output video stream (18) and/or newly inserted pictures (20, 21) is set to a value that is dependent on a value of a frame_num syntax element of a non-IDR-picture (12) that was received by the processing unit before the IDR-picture (14).

12. Method according to any of the preceding claims, wherein at least the first input video stream (10) is a H.264 video stream and wherein syntax elements that are dedicated to a picture order count and that are contained in the transformed picture (14') and the non-IDR-pictures (12') that are received after the IDR-picture (14) are changed.

13. Video processing device including:
- a video stream input unit for receiving at least one input video stream (10);
- a video stream output unit for transmitting a video output stream (18) to an external receiver;
- a processing unit that is adapted to perform a method according to one of claims 1 to 12.
